# EUROPÄISCHE PATENTSCHRIFT

(11) **EP 0 450 351 B1**
(45) Veröffentlichungstag und Bekanntmachung des Hinweises auf die Patenterteilung: **01.06.1994**
(21) Anmeldenummer: 91103787.7
(22) Anmeldetag: 13.03.1991
(51) Int. Cl.: B60H 1/00

(54) **Verfahren zur Regelung einer Heizungs- und Klimaanlage mit Zusatzeinrichtung in einem Kraftfahrzeug, insbesondere Nutzfahrzeug**
Process for the control of a heating and air-conditioning unit with auxiliary device in a motor vehicle, in particular commercial vehicle
Procédé pour le contrôle d'une unité de chauffage et de conditionnement d'air avec dispositif supplémentaire dans un véhicule automobile, en particulier véhicule utilitaire

(30) Priorität: 20.03.1990 DE 4008900
(43) Veröffentlichungstag der Anmeldung: 09.10.1991
(73) Patentinhaber: Iveco Magirus Aktiengesellschaft, D-89017 Ulm (DE)
(72) Erfinder: Bartsch, Erhard, W-7916 Nersingen (DE)
(74) Vertreter: TER MEER STEINMEISTER & PARTNER GbR

(56) Entgegenhaltungen:
- DE-A- 3 024 983
- DE-A- 3 424 366
- US-A- 4 682 649
- US-A- 4 700 888
- US-A- 4 730 662
- PATENT ABSTRACTS OF JAPAN vol. 7, no. 246 (M-253)(1391) 2 November 1983,& JP-A-58 133913 (NIPPON DENSO KK) 9 August 1983,
- PATENT ABSTRACTS OF JAPAN vol. 8, no. 148 (M-308)(1585) 11 Juli 1984,& JP-A-59 45211 (DIESEL KIKI KK) 14 März 1984,

## Beschreibung

Die Erfindung betrifft ein Verfahren zur Regelung einer Heizungs- und Klimaanlage mit Zusatzeinrichtung in einem Kraftfahrzeug, insbesondere Nutzfahrzeug, unter Zuhilfenahme einer Temperaturkennlinie (Sollwert-Kennlinie/Innentemperatur-Kennfeld).

Aus DE-A- 34 24 366 ist ein Verfahren und eine Vorrichtung zur Regelung der Temperatur in einem Nutzfahrzeug-Fahrerhaus bekannt, wobei ein einziger Regelkreis auf Heiz- und Kühleinrichtungen des Fahrzeugs einwirkt, um die Innenraumtemperatur auf den jeweils eingestellten Sollwert zu regeln. Der einzige Regelkreis steuert Motorheizung, Klimaanlage sowie eine Zusatzheizung im Heizwasserkreislauf, welcher zusätzlich den Kraftstoff vorheizt. Bekannte programmierbare Regelungen von Heizungs- und Klimaanlagen mit Zusatzheizgeräten im Wasserkreislauf sind nur teilweise automatisiert. Den jeweiligen Bedürfnissen des Bedienungspersonals wird nur ungenügend Rechnung getragen. Die Einschaltung und Zuordnung des Zusatzheizgeräts erfolgt manuell ausschließlich über einen Ein-/Aus-Schalter der Zusatzheizung. Luftverteilerklappen für Fußraum und für Scheibenklarung müssen von Hand auf die jeweiligen Bedürfnisse bezogen eingestellt werden. Eine weitere (höhere) Gebläsestufe kann nicht zugeschaltet werden. Es werden demzufolge gewisse logische Denkvorgänge vom Bedienungspersonal vorausgesetzt.

Aufbauend auf dem vorgenannten Stand der Technik ist es Aufgabe der Erfindung, ein Verfahren zur Regelung einer Heizungs- und Klimaanlage mit Zusatzheizung der eingangs genannten Art zu schaffen, welches bei vergleichsweise einfacher Ausgestaltung den Bedienungswünschen der Benutzungsperson bei hohem Klimakomfort optimal Rechnung trägt.

Gelöst wird die der Erfindung zugrundeliegende Aufgabe durch ein Regelverfahren der im Anspruch 1 wiedergegebenen Art.

Vorteilhaft weitergebildet wird das erfindungsgemäße Verfahren nach den Merkmalen der Unteransprüche 2 bis 17.

Wesen der Erfindung ist die Aufteilung des Standheizbetriebs, d.h. bei Fahrzeugmotorstillstand, in zwei Standheizbetriebsarten. Die Elektronik der motorabhängigen Heizungs-/Klimaanlage und die Elektronik der Zusatzheizung sind so miteinander verknüpft, daß die Funktionen der ersten Standheizbetriebsart und die Funktionen der zweiten Standheizbetriebsart automatisch erfolgen, d.h. die Luftverteilerklappen und die entsprechende Heizgebläsestufe (im motorabhängigen Heizgerät) und die Laufzeit der jeweiligen Heizungsfunktionen werden automatisch zugeordnet und eingestellt, ebenso der jeweils zugehörige große (Motor-) und der kleine (Fahrerhaus)-Wasserkreislauf.

Der Wasserkreislauf für Motor und Fahrerhaus wird so angesteuert, daß die Fahrerhausbeheizung vor der Motorbeheizung Vorrang hat, wenn beide gleichzeitig beheizt werden sollen.

Die erste Standheizbetriebsart, der Standheizbetrieb I, entspricht einer Schlafstellung, d.h. einer Komfortbeheizung, wobei das Fahrerhaus temperaturprogrammiert beheizt wird. In dieser Betriebsart wird vornehmlich das Fahrerhaus nach einer nach unten verschobenen Temperatur-Kennlinie betrieben, wobei die Temperatur im Fahrerhaus der vorgegebenen Sollwert-Kennlinie in Abhängigkeit der Außentemperatur folgt. Die Verschiebung der Kennlinie nach unten bedeutet, daß etwa 10°C tiefere Temperaturen angesteuert werden als bei einem Fahrbetrieb des Nutzfahrzeugs. Die Temperaturkennlinie ist vornehmlich eine sog. "Badewannenkurve" nach Art der Regelvorrichtung gemäß DE-A- 34 24 366. Sie ist in etwa einem parabelförmigen Kurvenverlauf angenähert. Bei einer Außentemperatur von ca. 15°C erreicht die Parabel ihr Minimum von ca. 23°C Innentemperatur. Bei Außentemperaturen über oder unter 15°C liegen die Innentemperaturen über 23°C (z.B. bei -30°C außen + 27°C innen; bei +50°C außen + 50°C innen). Da eine parabelförmige Regelkurve entsprechend einem optimalen menschlichen Behaglichkeitsempfinden komplizierte elektronische Schaltungselemente erforderlich machen, werden lineare Sollwert-Kennlinienabschnitte gewählt, die in ihrer Gesamtheit der vorgenannten Badewannen-Charakteristik entsprechen. Im unteren Bereich von Außentemperatur und unterhalb von 10°C hat die Sollwert-Kennlinie eine negative Steigung und im oberen Bereich von Außentemperatur und oberhalb etwa +20°C eine positive Steigung.

Die zweite Standheizbetriebsart entspricht einer Sofortbeheizung durch zeitlich vorprogrammiertes Beheizen von Fahrerhaus und Motor auf einen vorgegebenen maximalen Temperaturwert des Fahrerhauses, insbesondere auf 25°C. Letztgenannte zweite Standheizbetriebsart, der sog. Standheizbetrieb II, ist auf eine Heizmöglichkeit von ca. 60 min begrenzt.

Durch die Erfindung wird der Heizungskomfort gegenüber bekannten Regelverfahren wesentlich verbessert:

Die Gebläsestufen und die Verteilerklappen werden jeweils automatisch zugeordnet, wobei ein manueller Eingriff ebenfalls möglich ist. Der Betreiber muß nicht über komplizierte Zusammenhänge von Luftverteilung und Luftmenge und Einschaltdauer (Batterie) nachdenken.

Das Fahrerhaus wird bevorzugt beheizt, und die "Restwärme" wird dem Beheizen des Motors zugeordnet. Dadurch ist eine ausreichende Fahrerhausbeheizung stets möglich. Die "benachteiligte" Motorheizung beeinträchtigt den Fahrzeugmotor nicht, insbesondere deshalb, da dieser stillsteht. Weiterer Vorteil ist, daß die Batterie des Fahrzeugs geschont wird, da durch die jeweilige Zuordnung die Einschaltdauer begrenzt ist.

Die Erfindung wird nachfolgend anhand von Ausführungsbeispielen unter Bezugnahme auf beigefügte Zeichnung näher beschrieben; es zeigen:

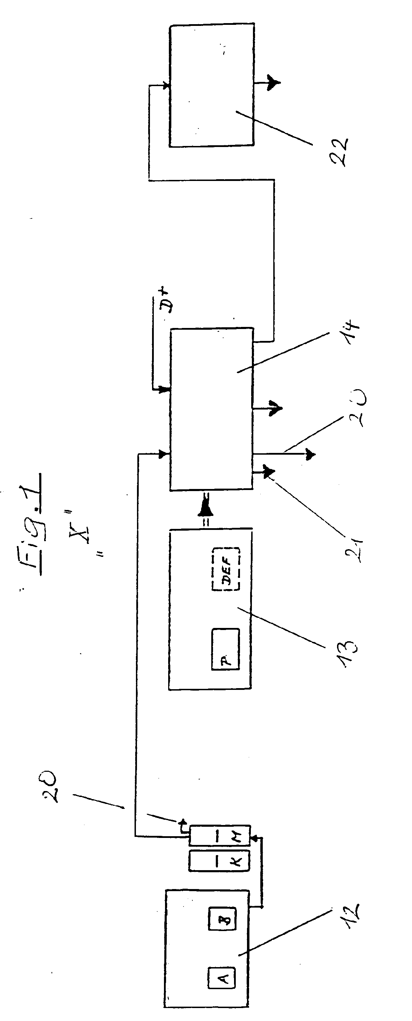

- Fig. 1: ein schematisches Blockdiagramm eines Standheizbetriebes I entsprechend einer Schlafstellung mit Steuerung des kleinen und des großen Wasserkreislaufs durch eine Elektronikbox einer Einstellautomatik,

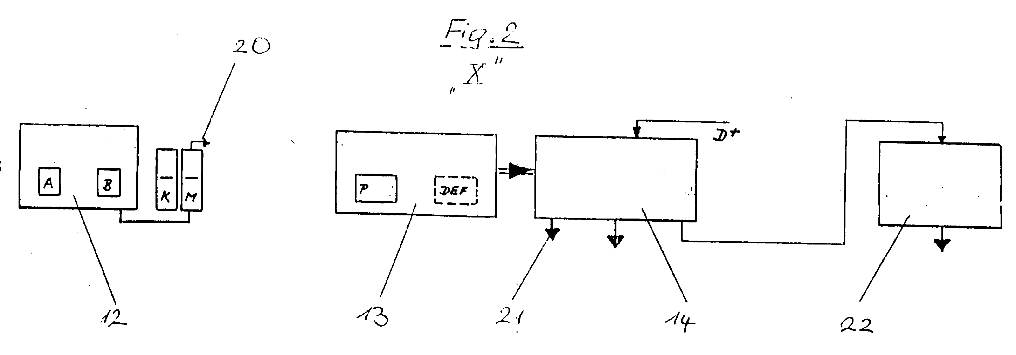

- Fig. 2: ein Blockdiagramm ähnlich Fig. 1 einer Schlafstellung, wobei der kleine Wasserkreislauf durch die Elektronikbox der Einstellautomatik betrieben und der große Wasserkreislauf gegebenenfalls separat angesteuert ist,

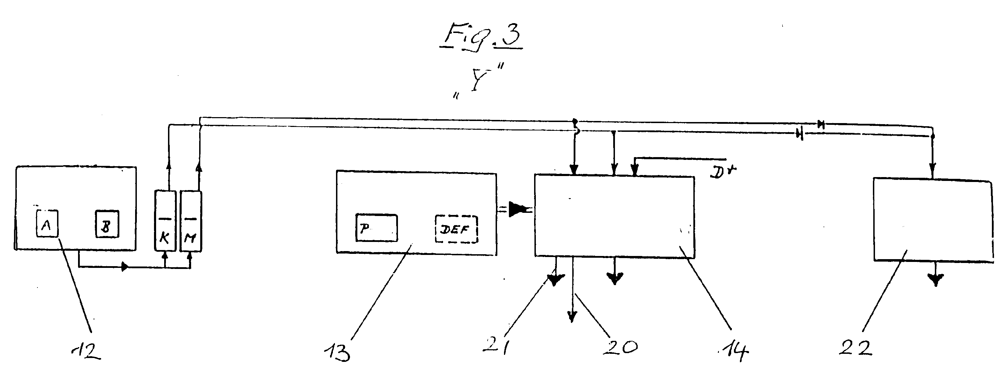

- Fig. 3: ein Blockschaltbild ähnlich den Fig. 1 und 2 eines Standheizbetriebes II entsprechend einer Sofortheizung oder zeitlich vorprogrammierten Beheizung eines Fahrerhauses und eines Motors, wobei der große Wasserkreislauf über die Elektronikbox der Einstellautomatik ähnlich dem Ausführungsbeispiel nach Fig. 1 angesteuert ist,

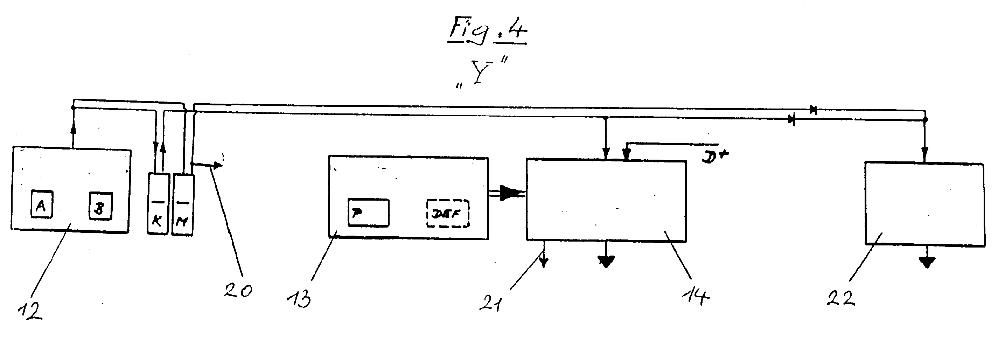

- Fig. 4: ein Blockschaltbild eines Standheizbetriebes II ähnlich Fig. 3, wobei nur der kleine Wasserkreislauf über die Elektronikbox der Einstellautomatik angesteuert ist, während der große Wasserkreislauf gegebenenfalls separat angesteuert ist,
- Fig. 5: ein schematisches Schaltbild einer Temperaturregelung, wobei durch eine Masseschaltung die Fahrerhausbeheizung Vorrang gegenüber der Motorbeheizung hat, und

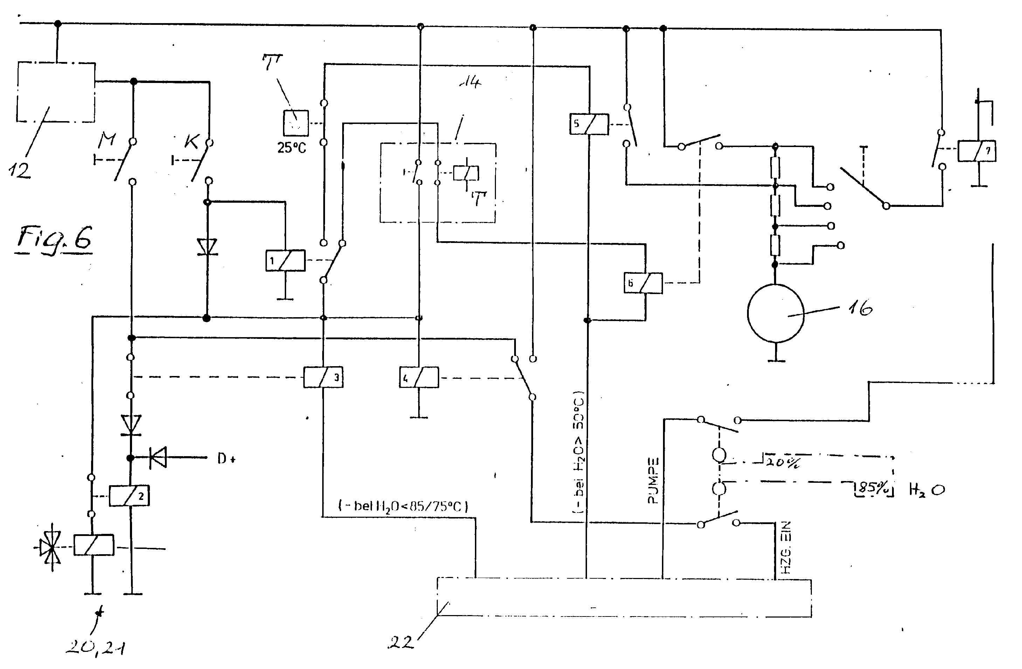

- Fig. 6: ein Schaltbild ähnlich Fig. 5 einer manuellen Heizungsregelung von Fahrerhaus und Motor mit Hilfe einer ersten Bedieneinheit, einem sog. Timer.

Im Regelkreis einer automatischen Heizungs- und Klimaanlage ist die Zusatzheizung mit deren Elektronik, d.h. mit ihrem eigenen Regelkreis, mit eingebunden.

Die Zusatzheizung kann bei stehendem Motor sowohl über eine zweite Bedieneinheit (13) über eine Programmiertaste (P) einer Einstellautomatik der normalen Heizungs-/Klimaanlage gerufen werden als auch über ein Ein-/Aus-Schaltelement einer ersten Bedieneinheit (12), einem sog. Timer einer Zusatzheizung. Außer beim "programmierten Heizen", bei welchem die Programmtaste (P) gedrückt ist, muß über zwei für den Wasserkreislauf verantwortliche Schalter (K und M) bestimmt werden, ob Fahrerhaus oder/und Motor beheizt werden soll.

Der Heizbetrieb mit Zusatzheizung bei stehendem Fahrzeugmotor, d.h. bei Fahrzeugstillstand, teilt sich auf in einen automatischen Standheizbetrieb I und einen automatischen Standheizbetrieb II.

Der Standheizbetrieb I entspricht einer sog. "Schlafstellung", d. h. einer temperaturprogrammierten Komfortbeheizung des Fahrerhauses durch Betätigung der Programmiertaste. Diese Heizmöglichkeit kann zeitlich unbegrenzt oder auf einen langen Zeitraum begrenzt sein.

Der zweite automatische Standheizbetrieb II entspricht einer sog. Sofortbeheizung, d.h. einer zeitlich vorprogrammierten Beheizung von Fahrerhaus oder/und Motor. Diese Heizmöglichkeit ist zeitlich z. B. auf 60 min begrenzt.

Generell für den Stand- und Fahrheizbetrieb gilt:

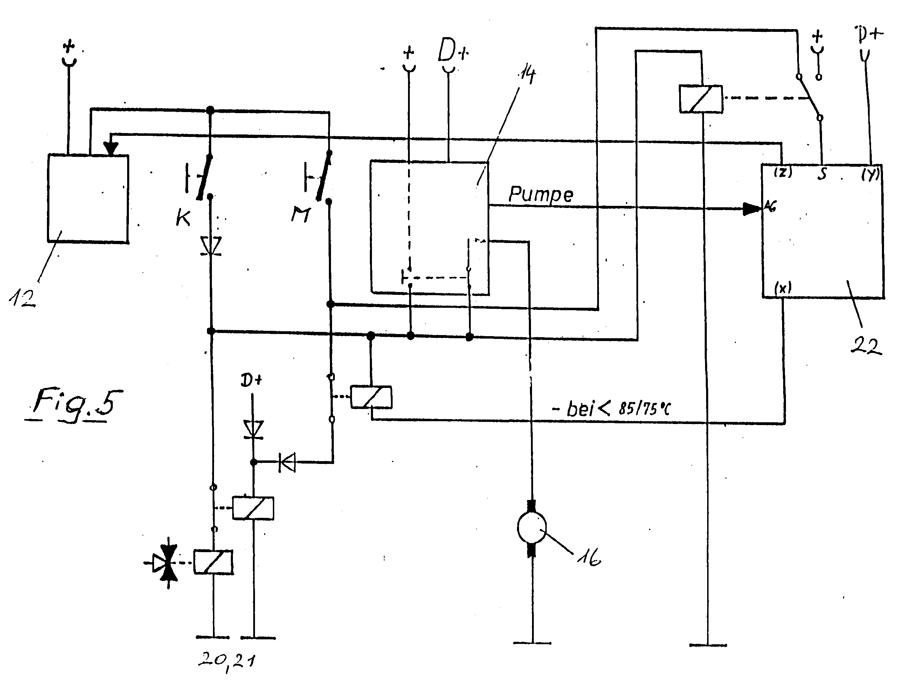

Es wird vom Generator oder der Lichtmaschine ein D⁺-Signal abgegeben, wenn nur die Fahrtheizungsfunktionen möglich sind. Liegt das D⁺-Signal nicht an, so sind nur die Standheizungsfunktionen möglich, d.h. die vorgenannten Standheizbetriebe I und II entsprechen D⁺ = 0.
1. Schlafstellung (programmiertes Heizen) Unter "Schlafstellung" (automatischer Standheizbetrieb I) versteht man die Beheizung des Fahrerhauses während des Aufenthaltes des Personals im Fahrerhaus während einer Schlafperiode:
   1.1. Nach Drücken der Programmtaste P bei gleichzeitiger Anzeige PROG auf einer Anzeigevorrichtung im Fahrerhaus wird die Fahrerhaus-Innenraumtemperatur über den Temperaturfühler außentemperaturabhängig über die vorgegebene Innenraumtemperatur-Kennlinie geregelt, d.h. die Innenraumtemperatur ist dabei 10°C niedriger als bei der Fahrstellung. Der zur jeweiligen Außentemperatur zugeordnete Sollwert erscheint dabei auf dem Sollwert-Temperatur-Display. Mit der Aktivierung über die Programmiertaste P wird gleichzeitig der kleine, dem Fahrerhaus zugeordnete Wasserkreislauf (21) beaufschlagt und das Heizgebläse (16) auf die erste bzw. kleinste Gebläsestufe und die Luftverteilerklappen im Heizgerät auf "Normalstellung" eingestellt, wobei die Defrosterklappe zu 20% und die Fußraumklappen zu 100% geöffnet sind (über jeweiliges Ausganssignal an einer Elektronikbox (14) einer Einstellautomatik). Die Heizdauer ist zeitlich unbegrenzt oder auf einen langen Zeitraum begrenzt und kann durch erneutes Drücken der Programmtaste P beendet werden.
   1.2. Des weiteren kann auf 60 min zeitlich begrenzt durch Drücken einer Defrostertaste DEF die gesamte Heizluftmenge zur Scheibenklarung geleitet werden (Defroster-Öffnungsstellung = 100%, Fußraumklappenstellung = 0 % entsprechend einer Schließstellung). Das Heizgebläse (16) läuft auf der zweiten Gebläsestufe. Die Heizanlage läuft dabei nach wie vor entsprechend der durch die Programmtaste P vorgegebenen Innenraum-Temperatur-Kennlinie. Nach Ablauf von 60 min wird automatisch auf "Normalstellung" zurückgesteuert. Die Normalstellung entspricht hierbei der ersten Heizgebläsestufe, und es sind die Defrosterklappen auf 20% eingestellt, während die Fußraumklappen auf 100% geöffnet sind.
   1.3. Während der vorgenannten Heizungsabläufe kann für die Zeitdauer von 60 min gleichzeitig, sofort oder zeitlich vorgewählt der Motor mit aufgeheizt werden. Dazu ist zuerst eine Taste M zu drücken und über die erste Bedieneinheit (12) ("Timer") der Zusatzheizung über die Tasten A oder B die Motorbeheizung zu aktivieren.
      Sobald über die erste Bedieneinheit (12) das Ausgangssignal über den Schalter M durchgeschaltet wird, wird über die Elektronikbox (14) der Einstellautomatik oder über den Schalter M direkt der große Wasserkreislauf (20) für die Motorbeheizung aktiviert. Die Beheizung des Fahrerhauses hat jedoch während dieses Zustandes Vorrang, d.h. das Fahrerhaus erhält die notwendige maximale Heizleistung über eine sog. Vorrangschaltung, und es wird die Restwärme dem Motor zugeheizt. Dies erfolgt z.B. über ein 2/3-Wegeventil mit Magnetventil (8) oder über zwei Magnetventile (2, 3) oder ein Bypaßventil oder über ein entsprechendes Drosselelement. Die Steuerung dieser Vorrangschaltung erfolgt über den elektrischen Steuerkreis der Zusatzheizung.
2. Sofortbeheizung bzw. zeitlich vorgewähltes Heizen (zeitlich programmiertes Heizen) entsprechend einem Standheizbetrieb II. Unter "Sofortheizen" versteht man, daß sofort das Fahrerhaus auf eine festgelegte Innenraum-Temperatur, z.B. 25°C schnellstmöglich hochgeheizt wird. Dies soll dem Personal ermöglichen, während des Aufenthaltes im Fahrerhaus (Warte-, Ruhezeit, etc., Nichtschlafposition) schnell eine relativ hohe Raumtemperatur zu erreichen oder nach Ende der Fahrt eine relativ hohe Raumtemperatur T zu halten.
   2.1. Dazu muß der Schalter A der ersten Bedieneinheit (12) der Zusatzheizung gedrückt werden. Vorher müssen von der Bedienungsperson K oder/und M gedrückt werden.
   2.1.1. Ist K gedrückt, so erhält die Elektronikbox (14) der Einstellautomatik ebenso ein Signal wie die Elektronikbox (22) der Zusatzheizung. Über dieses Signal wird die Zusatzheizung eingeschaltet. Die Elektronikbox (14) der Einstellautomatik fragt das D⁺-Signal ab und überwacht die Innenraumtemperatur T, welche insbesondere maximal auf 25°C eingestellt ist, und fährt die Luftverteilerklappen auf Normalstellung (Defrosterklappenstellung 20%, Fußraumklappen-Öffnungsstellung 100%). Das Heizgebläse (16) wird auf die zweite Gebläsestufe geschaltet, und es wird der kleine Wasserkreislauf (21) automatisch aktiviert.
      Diese Heizstellung ist zeitlich begrenzt auf z. B. 60 min. Nach dieser Zeit wird die Zusatzheizung selbsttätig abgeschaltet.
      Selbstverständlich kann auch hier die Defrosterfunktion analog Punkt 1.2. gerufen werden.
   2.1.2. Ist der Schalter M vorher gedrückt, so geht das Signal von der ersten Bedieneinheit (12) über den Schalter M zur Elektronikbox (14) der Einstellautomatik und zur Elektronikbox (22) der Zusatzheizung und schaltet diese ein. Über das Ausgangssignal der Elektronikbox (14) der Einstellautomatik wird dabei der kleine Wasserkreislauf (21) reaktiviert, und es wird der große Wasserkreislauf (20) aktiviert (die Aktivierung des großen Wasserkreislaufs (20) kann auch unabhängig von der Elektronikbox (14) der Einstellautomatik direkt über den Schalter M an den elektrischen Steuerkreis des Wasserkreislaufs erfolgen).
      Diese Heizstellung ist ebenfalls zeitlich auf z. B. 60 min begrenzt. Nach dieser Zeit wird die Zusatzheizung automatisch abgeschaltet.
   2.1.3. Sind sowohl der Schalter K und der Schalter M gedrückt, so sind beide Heizfunktionen, d.h. Fahrerhausbeheizung und Motorbeheizung aktiviert. Hierbei ist der große Wasserkreislauf (20) offen. Die Beheizung des Fahrerhauses hat jedoch Vorrang, d.h. das Fahrerhaus erhält die notwendige maximale Heizleistung über die Vorrangschaltung beispielsweise gemäß Fig. 5, und es wird die Restwärme dem Motor zugeleitet.
      Die Steuerung der Vorrangschaltung erfolgt über den elektrischen Steuerkreis der Zusatzheizung.
      Die Heizstellung ist ebenfalls auf zeitlich z.B. 60 min begrenzt. Nach dieser Zeit wird die Zusatzheizung automatisch abgeschaltet. Die Funktion der Fahrerhausbeheizung bezüglich "Normalstellung" bzw. Defrosterstellung ist die gleiche wie vorher beschrieben.
   2.2. Über den Schalter B wird die Heizung zeitprogrammiert eingeschaltet, d.h. es gelten die Punkte 2.1.1., 2.1.2. und 2.1.3. analog, mit dem Unterschied, daß der Einschaltzeitpunkt nicht sofort, sondern zu einem über die erste Bedieneinheit (12) ("Timer") vorbestimmten Zeitpunkt erfolgt (eventuell mehrere vorbestimmte Zeitpunkte).

## Patentansprüche

1. Verfahren zur Regelung einer Heizungs- und Klimaanlage mit Zusatzeinrichtung in einem Kraftfahrzeug, insbesondere Nutzfahrzeug, unter Zuhilfenahme einer Temperaturkennlinie (Sollwert-Kennlinie/Innentemperatur-Kennfeld), dadurch gekennzeichnet,
daß bei Fahrzeugmotorstillstand (D⁺ = O) der Standheizbetrieb aufgeteilt, d.h. eingestellt wird in
a) einen automatischen Standheizbetrieb I entsprechend einer Schlafstellung-Beheizung X des Fahrerhauses durch temperaturprogrammiertes Fahrerhausbeheizen mit gegenüber Fahrbetrieb nach unten verschobener Temperatur-Kennlinie, oder in
b) einen automatischen Standheizbetrieb II entsprechend einer Sofort-Beheizung Y durch zeitlich vorprogrammiertes Beheizen von Fahrerhaus und Motor bis auf einen vorgegebenen maximalen Fahrerhaus-Innentemperaturwert T,
wobei bei gleichzeitiger Fahrerhaus- und Motorbeheizung durch eine Vorrangschaltung das Fahrerhaus bevorzugt beheizt wird, und
sowohl beim automatischen Standheizbetrieb I als auch beim automatischen Standheizbetrieb II die Regelung der Zusatzheizung und der Heizungs-/Klimaanlage sowie die Einstellung der Luftverteilerklappen für Fußraum und Scheibenklarung (DEF) und eine zugeordnete Gebläsestufe und beim zeitlich vorprogrammierten Beheizen die zeitliche Begrenzung, auf z. B. 60 min, automatisch erfolgen.

2. Verfahren nach Anspruch 1,
dadurch gekennzeichnet,
daß trotz automatischer Regelung der Gebläsestufen und der Luftverteilerklappen diese auch manuell bedient werden können.

3. Verfahren nach Anspruch 1 oder 2,
dadurch gekennzeichnet,
daß über eine Einstellautomatik der (normalen) Heizungs-/Klimaanlage bei Fahrzeugmotorstillstand (D⁺ = O) die Zusatzheizung, d.h. beim Standheizbetrieb 1, durch Drücken einer Programmtaste P gerufen wird, wobei auf einem Display die Anzeige "PROG" erscheint.

4. Verfahren nach Anspruch 3,
dadurch gekennzeichnet,
daß nach Drücken der Programmtaste P über eine erste Elektronikbox (14) der Heizungs-/Klimaanlage die Fahrerhausbeheizung über einen dazu bestimmten kleinen Wasserkreislauf (21) in Funktion gesetzt wird, wobei die Temperatur im Fahrerhaus der vorgegebenen Sollwert-Kennlinie in Abhängigkeit der Außentemperatur (insbesondere 10°C tiefer als beim Fahrbetrieb) folgt, und daß das Heizgebläse (16) dabei automatisch auf der ersten Stufe sowie die Luftverteilerklappen auf ca. 20% -DEF- und ca. 100% - Fußraum-Öffnungsstellung gefahren werden, während die Betriebsdauer der Zusatzheizung und damit die Funktion des Standheizbetriebs I zeitlich unbegrenzt ist.

5. Verfahren nach Anspruch 3,
dadurch gekennzeichnet,
daß bei einem Standheizbetrieb I nach einem Betätigen einer Defrostertaste (DEF) am Bedienteil (13) der Einstellautomatik das Gebläse (16) auf die zweite Gebläsestufe geschaltet wird, und daß die Defrosterklappe (DEF) auf ca. 100% geöffnet und die Fußraum-Ausströmklappen auf ca. 100% geschlossen gefahren werden, wobei die Funktion zeitlich begrenzt ist auf insbesondere 60 min (Scheibenklarung während "Schlafstellungs-Heizbetrieb").

6. Verfahren nach Anspruch 5,
dadurch gekennzeichnet,
daß nach Ablauf der Defrosterstellung von insbesondere 60 min bei einem Standheizbetrieb I die Einstellautomatik selbsttätig wieder auf normale "Schlafstellungsfunktion" zurückschaltet, d.h. das Gebläse (16) auf die erste Gebläsestufe und die Defrosterklappen auf ca. 20% und die Fußraum-Ausströmklappen auf ca. 100% bei zeitlich unbegrenzter Betriebsdauer.

7. Verfahren nach einem der Ansprüche 3 bis 6,
dadurch gekennzeichnet,
daß die Zusatzheizung durch erneutes Drücken der Programmtaste P wieder ausgeschaltet wird, wobei auf dem Display die Anzeige PROG erlischt, d.h. der Standheizbetrieb I reaktiviert wird.

8. Verfahren nach einem der Ansprüche 3 bis 6,
dadurch gekennzeichnet,
daß während eines Standheizbetriebes I bei gedrückter Programmtaste P über einen Ein-/Aus-Schalter bzw. eine Zeitschaltuhr einer ersten Bedieneinheit (12) der Zusatzheizung eine zeitlich bestimmte und zeitlich begrenzte Motorvorwärmung (bzw. Motorwarmhaltung) programmiert wird, wobei der für einen großen Wasserkreislauf (20) bestimmte Schalter M gedrückt und dann über eine Taste B der ersten Bedieneinheit (12) der Zusatzheizung der Beginn der Motorvorwärmzeit bestimmt werden, wobei die Heizdauer auf 60 min zeitlich begrenzt wird.

9. Verfahren nach Anspruch 8,
dadurch gekennzeichnet,
daß über den Schalter M der große Wasserkreislauf (20) geöffnet und das Wasser über den Motor und die Fahrerhausheizung geleitet wird, wobei der kleine Wasserkreislauf (21) automatisch verschlossen wird, und daß der kleine Wasserkreislauf (20) der Fahrerhausbeheizung gegenüber dem großen Wasserkreislauf (20) durch eine Vorrangschaltung bevorzugt wird, wobei bei vorher gedrückter Programmtaste P die Fahrerhausbeheizung dem Standheizbetrieb I folgt.

10. Verfahren nach einem der Ansprüche 7 bis 9,
dadurch gekennzeichnet,
daß nach Ablauf der Motorvorwärmzeit, d.h. nach ca. 60 min, die Einstellautomatik selbständig auf den kleinen Wasserkreislauf (21) umschaltet, und daß der Standheizbetrieb I mit kleinem Wasserkreislauf (21) weiter betrieben wird.

11. Verfahren nach einem der Ansprüche 1 bis 10,
dadurch gekennzeichnet,
daß das Fahrerhaus bei großem Wasserkreislauf (20), d.h. bei Motor- und Fahrerhausbeheizung, vorrangig beheizt wird, d.h. der Motor nur über die Restwärme versorgt wird, welche beim Beheizen des Fahrerhauses übrigbleibt.

12. Verfahren nach Anspruch 11,
dadurch gekennzeichnet,
daß der große Wasserkreislauf (20) über getaktete Magnetventile (1, 2, 3) oder über ein getaktetes 2/3-Wegeventil oder getaktete Bypaßventile mit warmem Wasser beaufschlagt wird, d.h. der kleine Wasserkreislauf (21) Vorrang hat und damit auch die Fahrerhausbeheizung, wobei bei Überschreiten einer vorgegebenen Wassertemperatur, insbesondere 85°C, vor der Elektronikbox (22) der Zusatzheizung der große Wasserkreislauf (20) geöffnet bzw. getaktet wird.

13. Verfahren nach einem der Ansprüche 1 bis 12,
dadurch gekennzeichnet,
daß der Schalter K bei einem Standheizbetrieb I außer Funktion gehalten wird.

14. Verfahren nach Anspruch 13,
dadurch gekennzeichnet,
daß bei einem Standheizbetrieb II durch Drücken des Ein-/Aus-Schalters bzw. der Zeitschaltuhr der ersten Bedieneinheit (12) über die Elektronikbox (14) der Heizungs-/Klimaanlage die Raumtemperatur auf eine bestimmte Temperatur T hochgefahren wird, insbesondere auf 25°C, daß die Luftverteilerklappen auf ca. 20% Defroster- und ca. 100% Fußraum-Öffnungsstellung gefahren werden, daß das Heizgebläse (16) in der zweiten Gebläsestufe betrieben wird, während die Heizdauer auf ca. 60 min begrenzt ist und nach Ablauf dieser Zeit die Zusatzheizung selbsttätig abschaltet, wobei alternativ auch eine Öffnungsstellung von ca. 100% der Defrosterklappen und eine Schließstellung auf ca. 100% der Fußraumklappen möglich ist.

15. Verfahren nach einem der Ansprüche 1 bis 14,
dadurch gekennzeichnet,
daß bei einem Standheizbetrieb II durch Einbindung der Elektronikbox (14) der Heizungs-/Klimaanlage selbsttätig der kleine Wasserkreislauf (21) gerufen wird, wobei das Steuersignal der ersten Bedieneinheit (12) der Zusatzheizung durch Betätigen des Schalters K der Elektronikbox (14) der Heizungs-/Klimaanlage und der Elektronikbox (22) der Zusatzheizung eingesteuert wird.

16. Verfahren nach einem der Ansprüche 1 bis 15,
dadurch gekennzeichnet,
daß der kleine Wasserkreislauf (21) und der große Wasserkreislauf (20) durch Betätigen der Schalter K bzw. M direkt angesteuert werden.

17. Verfahren nach einem der Ansprüche 1 bis 16,
dadurch gekennzeichnet,
daß sowohl der kleine Wasserkreislauf (21) als auch der große Wasserkreislauf (20) über die Elektronikbox (14) der Heizungs-/Klimaanlage über deren Ausgangssignale angesteuert werden.

## Claims

1. Method for controlling a heating and air-conditioning system with supplementary device in a motor vehicle, in particular a commercial vehicle, with the aid of a temperature characteristic curve (set value characteristic curve/internal temperature characteristic diagram), characterized in that when the engine of the vehicle is at a standstill (D⁺ = 0) the stationary heating mode is divided, i.e. set, into
a) an automatic stationary heating mode I in accordance with a sleeping-position heating X of the driver's cab by temperature-programmed heating of the driver's cab with a temperature characteristic curve which is displaced downwards with respect to travel mode, or into
b) an automatic stationary heating mode II in accordance with an immediate heating Y by means of heating of the driver's cab and engine, with preprogrammed timing, up to a predetermined maximum interior temperature T of the driver's cab,
the driver's cab being preferably heated with simultaneous heating of the driver's cab and engine by means of a priority switch, and the control of the supplementary heating and of the heating/air-conditioning system and the setting of the air distributor vents for footwell and window demisting (DEF) and an associated blower level in the automatic stationary heating mode I and in the automatic stationary heating mode II, and the limitation of the timing to, for example, 60 minutes during heating with preprogrammed timing, taking place automatically.

2. Method according to Claim 1, characterized in that despite automatic control of the blower levels and the air distributor vents they can also be operated manually.

3. Method according to Claim 1 or 2, characterized in that when the engine of the vehicle is at a standstill (D⁺ = 0) the supplementary heating, i.e. in the stationary heating mode I, can be called up by means of an automatic setting device of the (normal) heating/air conditioning system by pressing a program key P, the indication "PROG" appearing on a display.

4. Method according to Claim 3, characterized in that after pressing the program key P the heating of the driver's cab by means of a small water circuit (21) intended for that purpose is activated by means of a first electronic box (14) of the heating/air-conditioning system, the temperature in the driver's cab following the predetermined set value characteristic curve as a function of the external temperature (in particular 10°C lower than in travel mode), and in that the heating blower (16) is set automatically in this case to the first level and the air distributor vents are set to approximately 20% DEF- and approximately 100% footwell-open position whilst the period of operation of the supplementary heating and thus the functioning of the stationary heating mode I is unlimited in time.

5. Method according to Claim 3, characterized in that in a stationary heating mode I the blower (16) is switched to the second blower level after actuation of a defroster key (DEF) on the control component (13) of the automatic setting device, and in that the defroster vent (DEF) is opened by approximately 100% and the footwell outlet vents are set to approximately 100% closed, the function being limited in time to in particular 60 minutes (window demisting during "sleeping-position heating mode").

6. Method according to Claim 5, characterized in that after the expiry of the defroster position of in particular 60 minutes in a stationary heating mode I the automatic setting device switches back automatically to normal "sleeping-position function", i.e. the blower (16) switches back to the first blower level and the defroster vents switch back to approximately 20% and the footwell outlet vents switch back to approximately 100% with a period of operation unlimited in time.

7. Method according to one of Claims 3 to 6, characterized in that the supplementary heating is switched off again by renewed pressing of the program key P, the indication PROG on the display going out, i.e. the stationary heating mode I is reactivated.

8. Method according to one of Claims 3 to 6, characterized in that during a stationary heating mode I with the program key P pressed, preheating of the engine (or keeping the engine warm) of a defined and limited duration is programmed by means of an on/off switch or a timer of a first control unit (12) of the supplementary heating, the switch M intended for a large water circuit (20) being pressed and then the start of the engine preheating time being determined by means of a key B of the first control unit (12) of the supplementary heating, the duration of heating being limited in time to approximately 60 minutes.

9. Method according to Claim 8, characterized in that the large water circuit (20) is opened by means of the switch M and the water is directed via the engine and the heating of the driver's cab, the small water circuit (21) being closed off automatically, and in that the small water circuit (21) of the heating of the driver's cab is preferred with respect to the large water circuit (20) by means of a priority switch, the heating of the driver's cab following the stationary heating mode I when the program key P has been previously pressed.

10. Method according to one of Claims 7 to 9, characterized in that after the expiry of the engine preheating time, i.e. after approximately 60 minutes, the automatic setting device is automatically switched over to the small water circuit (21), and in that the stationary heating mode I continues to be operated with the small water circuit (21).

11. Method according to one of Claims 1 to 10, characterized in that the driver's cab has priority with respect to heating with the large water circuit (20), i.e. with heating of the engine and driver's cab, i.e. the engine is only supplied via the residual heat which remains when the driver's cab is being heated.

12. Method according to Claim 11, characterized in that the large water circuit (20) is fed with warm water via clocked solenoid valves (1, 2, 3) or via a clocked 2/3-way valve or clocked bypass valve, i.e. the small water circuit (21) has priority and thus also the heating of the driver's cab, the large water circuit (20) being opened or clocked when a predetermined water temperature, in particular 85°C, is exceeded upstream of the electronic box (22) of the supplementary heating.

13. Method according to one of Claims 1 to 12, characterized in that the switch K is kept deactivated in a stationary heating mode I.

14. Method according to Claim 13, characterized in that in a stationary heating mode II the room temperature is raised to a specific temperature T, in particular to 25°C, by pressing the on/off switch or the timer of the first control unit (12) by means of the electronic box (14) of the heating/air-conditioning system, in that the air distributor vents are set to approximately 20% defroster- and approximately 100% footwell-open position, in that the heater blower (16) is operated at the second blower level whilst the duration of heating is limited to approximately 60 minutes and after the expiry of this time the supplementary heating is automatically switched off, an open position of approximately 100% of the defroster vents and a closed position to approximately 100% of the footwell vents being also alternatively possible.

15. Method according to one of Claims 1 to 14, characterized in that in a stationary heating mode II the small water circuit (21) is automatically called up by means of involvement of the electronic box (14) of the heating/air-conditioning system, the control signal of the first control unit (12) of the supplementary heating being fed to the supplementary heating by actuating the switch K of the electronic box (14) of the heating/air-conditioning system and of the electronic box (22).

16. Method according to one of Claims 1 to 15, characterized in that the small water circuit (21) and the large water circuit (20) are driven directly by actuating the switches K and M.

17. Method according to one of Claims 1 to 16, characterized in that both the small water circuit (21) and the large water circuit (20) are driven by means of the electronic box (14) of the heating/air-conditioning system by means of their output signals.

## Revendications

1. Procédé de réglage d'une installation de chauffage et de climatisation comprenant un dispositif auxiliaire et se trouvant dans un véhicule à moteur, en particulier un véhicule utilitaire, à l'aide d'une courbe caractéristique de température (courbe caractéristique de consigne/diagramme caractéristique de température intérieure), caractérisé en ce qu'à l'arrêt du moteur du véhicule (D⁺ = 0), le régime de chauffage à l'arrêt est subdivisé, c'est-à-dire réglé en
a) un régime de chauffage automatique à l'arrêt I correspondant à un chauffage en position de sommeil X de la cabine par chauffage de la cabine avec programmation de la température et avec une courbe caractéristique de température décalée vers le bas par rapport au régime en marche, ou en
b) un régime de chauffage automatique à l'arrêt II correspondant à un chauffage immédiat Y par chauffage préalablement programmé dans le temps de la cabine et du moteur jusqu'à une température intérieure maximale prescrite T de la cabine,
la cabine étant chauffée de manière préférentielle par un circuit de priorité en cas de chauffage simultané de la cabine et du moteur et
le réglage du chauffage auxiliaire et de l'installation de chauffage et de climatisation ainsi que le positionnement des clapets de distribution d'air de la région au niveau des pieds et pour dégager le pare-brise (DEF) ainsi que le réglage d'une vitesse correspondante de la soufflante s'effectuent automatiquement aussi bien en régime de chauffage automatique à l'arrêt I qu'en régime de chauffage automatique à l'arrêt II et la limitation dans le temps, par exemple à 60 min, lors du chauffage préalablement programmé dans le temps, s'effectue aussi automatiquement.

2. Procédé selon la revendication 1, caractérisé en ce que le réglage des vitesses de la soufflante et des clapets de distribution d'air peut aussi être commandé à la main malgré leur réglage automatique.

3. Procédé selon la revendication 1 ou 2, caractérisé en ce que le chauffage auxiliaire, c'est-à-dire lors du régime de chauffage à l'arrêt I, est appelé par appui sur une touche de programmation I′ et au moyen d'un appareil automatique de réglage de l'installation (normale) de chauffage et de climatisation lorsque le moteur du véhicule est à l'arrêt (D⁺ = 0), l'indication "PROG" apparaissant alors sur un affichage.

4. Procédé selon la revendication 3, caractérisé en ce qu'après appui sur la touche de programmation P, une première boîte électronique (14) de l'installation de chauffage et de climatisation met en fonction le chauffage de la cabine au moyen d'un petit circuit d'eau (21) qui lui est destiné, la température de la cabine suivant la courbe caractéristique prescrite de consigne en fonction de la température extérieure (et étant en particulier de 10°C plus basse qu'en régime de marche), et en ce que la soufflante de chauffage (16) est mise en marche automatiquement à la première vitesse et les clapets de distribution d'air sont mis en position d'ouverture à environ 20% - DEF - et à environ 100% pour la région au niveau des pieds, tandis que la durée de marche du chauffage auxiliaire et donc la fonction du régime du chauffage à l'arrêt I sont illimitées dans le temps.

5. Procédé selon la revendication 3**,** caractérisé en ce que l'appareil automatique de réglage branche la soufflante (16) à sa seconde vitesse en régime de chauffage à l'arrêt I, après actionnement d'une touche de dégivrage (DEF) du groupe de commande (13) et en ce que le clapet de dégivrage (DEF) est mis en position d'ouverture à environ 100% et les clapets débouchant dans la région au niveau des pieds sont fermés à environ 100%, la fonction étant limitée dans le temps, en particulier à 60 min (dégagement du pare-brise pendant le "régime de chauffage en position de sommeil").

6. Procédé selon la revendication 5, caractérisé en ce qu'à la fin de la position de dégivrage, en particulier de 60 min, l'appareil automatique de réglage se remet automatiquement en fonction normale "à la position de sommeil" en régime de chauffage à l'arrêt I, c'est-à-dire que la soufflante (16) est remise à la première vitesse et les clapets de dégivrage sont réouverts à environ 20%, tandis que les clapets débouchant sur la région au niveau des pieds sont réouverts à environ 100% avec une durée de fonctionnement illimitée dans le temps.

7. Procédé selon l'une des revendications 3 à 6, caractérisé en ce que le chauffage auxiliaire est remis à l'arrêt par nouvel appui sur la touche de programmation P, l'indication PROG s'allumant alors sur l'affichage, c'est-à-dire que le régime de chauffage à l'arrêt I est remis en service.

8. Procédé selon l'une des revendications 3 à 6, caractérisé en ce que, pendant un régime de chauffage à l'arrêt I, alors que la touche de programmation P a été poussée, un réchauffage du moteur déterminé dans le temps et limité dans le temps (ou un maintien du moteur à l'état chaud) est programmé au moyen d'un interrupteur de marche/arrêt et d'une minuterie d'un premier groupe de commande (12) du chauffage auxiliaire, l'interrupteur M destiné à un grand circuit d'eau (20) étant enclenché et ensuite le début de la période de réchauffage du moteur étant déterminé par une touche B du premier groupe de commande (12) du chauffage auxiliaire, la durée du chauffage étant limitée dans le temps à 60 min.

9. Procédé selon la revendication 8, caractérisé en ce que le grand circuit d'eau (20) s'ouvre au moyen de l'interrupteur M et l'eau est alors dirigée sur le moteur et sur le chauffage de la cabine, le petit circuit d'eau (21) étant automatiquement fermé, et en ce qu'un circuit de priorité rend le petit circuit d'eau (21) du chauffage de la cabine prépondérant par rapport au grand circuit d'eau (20) et alors, lorsque la touche de programmation P a été préalablement enfoncée, le chauffage de la cabine suit le régime de chauffage à l'arrêt 1.

10. Procédé selon l'une des revendications 7 à 9, caractérisé en ce qu'à la fin du temps de réchauffage du moteur, c'est-à-dire après environ 60 min, l'appareil automatique de réglage commute automatiquement sur le petit circuit d'eau (21) et en ce que le régime de chauffage à l'arrêt I se poursuit avec le petit circuit d'eau (21).

11. Procédé selon l'une des revendications 1 à 10, caractérisé en ce que, lorsque le grand circuit d'eau (20) est en service, c'est-à-dire lors du chauffage du moteur et de la cabine, la cabine est chauffée en priorité, c'est-à-dire que le moteur ne reçoit plus que le reste de la chaleur qui n'est pas utilisée pour le chauffage de la cabine.

12. Procédé selon la revendication 11, caractérisé en ce que le grand circuit d'eau (20) est alimenté en eau chaude par des électrovannes synchronisées (1, 2, 3) ou par un distributeur 2/3 synchronisé ou par de distributeurs synchronisés de dérivation, c'est-à-dire que le petit circuit d'eau (21) a la priorité et donc aussi le chauffage de la cabine, le grand circuit d'eau (20) étant ouvert ou synchronisé par la boîte électronique (22) du chauffage auxiliaire en cas de dépassement d'une température prescrite d'eau, en particulier de 85°C.

13. Procédé selon l'une des revendications 1 à 12, caractérisé en ce que l'interrupteur K est maintenu hors fonction en régime de chauffage à l'arrêt I.

14. Procédé selon la revendication 13, caractérisé en ce qu'en un régime de chauffage à l'arrêt II, la température ambiante subit une élévation à une température déterminée T, en particulier à 25°C, par appui sur l'interrupteur de marche/arrêt, ou au moyen de la minuterie du premier groupe de commande (12) et par l'entremise de la boîte électronique (14) de l'installation de chauffage et de climatisation, en ce que les clapets de distribution d'air sont mis en position d'ouverture d'environ 20% pour le dégivrage et d'environ 100% pour la région au niveau des pieds, en ce que la soufflante de chauffage (16) est amenée à la seconde vitesse de marche, tandis que la durée de chauffage est limitée à environ 60 min et, à la fin de cette période, le chauffage auxiliaire s'arrête automatiquement, en variante une position d'ouverture d'environ 100% des clapets de dégivrage et une position de fermeture d'environ 100% des clapets de la région des pieds étant aussi possibles.

15. Procédé selon l'une des revendications 1 à 14, caractérisé en ce que le petit circuit d'eau (21) est appelé automatiquement en régime de chauffage à l'arrêt II par mise en service de la boîte électronique (14) de l'installation de chauffage et de climatisation, le signal de commande du premier groupe de commande (12) du chauffage auxiliaire étant déclenché par actionnement de l'interrupteur K de la boîte électronique (14) de l'installation de chauffage et de climatisation et de la boîte électronique (22) du chauffage auxiliaire.

16. Procédé selon l'une des revendications 1 à 15, caractérisé en ce que le petit circuit d'eau (21) et le grand circuit d'eau (20) sont mis en service directement par actionnement des interrupteurs K et M.

17. Procédé selon l'une des revendications 1 à 16, caractérisé en ce qu'aussi bien le petit circuit d'eau (21) que le grand circuit d'eau (20) sont mis en service par les signaux de sortie de la boîte électronique (14) de l'installation de chauffage et de climatisation.
